# EUROPEAN PATENT SPECIFICATION

(11) **EP 1 524 136 B1**
(45) Date of publication and mention of the grant of the patent: **05.09.2007**
(21) Application number: 04024412.1
(22) Date of filing: 13.10.2004
(51) Int. Cl.: B60G 17/015, B60G 17/08, F16F 9/46

(54) **Method for controlling damping force in an electronically-controlled suspension apparatus**
Verfahren zum Steuern der Dämpfungskraft in einer elektronisch-gesteuerten Aufhängungsvorrichtung
Procédé de commande de la force d'amortissement d'un dispositif de suspension à commande électronique

(30) Priority: 15.10.2003 KR 2003071629
(43) Date of publication of application: 20.04.2005
(73) Proprietor: Mando Corporation, Pyungtaek-si, Kyonggi-do 451-821 (KR)
(72) Inventor: Kim, Wanil Central R & D Center, Pyungstaek-si Kyonggi-do 451-821 (KR)
(74) Representative: Turi, Michael

(56) References cited:
- EP-A- 0 465 849
- DE-A1- 4 039 003
- US-A- 4 647 068
- US-A- 4 984 820
- US-A- 5 162 996
- US-A- 6 058 340
- US-B1- 6 176 494

## Description

The present invention relates to a method for controlling damping force in an electronically-controlled suspension apparatus.

In general, a suspension apparatus connects a wheel axle to a vehicle body to prevent vibration and impact transmitted from the wheel axle from being directly transmitted to the vehicle body, such that it prevents a vehicle body and goods contained therein from being damaged and improves ride comfort of the vehicle. Also, the suspension apparatus transfers to the vehicle body either driving force generated from driving wheels or brake force of individual wheels when braking the vehicle to a stop, endures centrifugal force generated when turning the vehicle, and maintains the individual wheels at accurate positions on the basis of the vehicle body.

In the meantime, an electronically-controlled suspension apparatus includes a plurality of sensors installed in a vehicle, and varies a damping coefficient of a damper in response to information from the sensors, such that it improves the ride comfort and steering stability of the vehicle.

The aforementioned suspension apparatus independently controls damping forces of variable dampers for four wheels, such that it can maximally guarantee merits of an independent suspension system. In more detail, the suspension apparatus is equipped with vertical acceleration sensors attached to the vehicle body, such that each of them can measure movement of the individual wheels and at the same time can independently control the wheels.

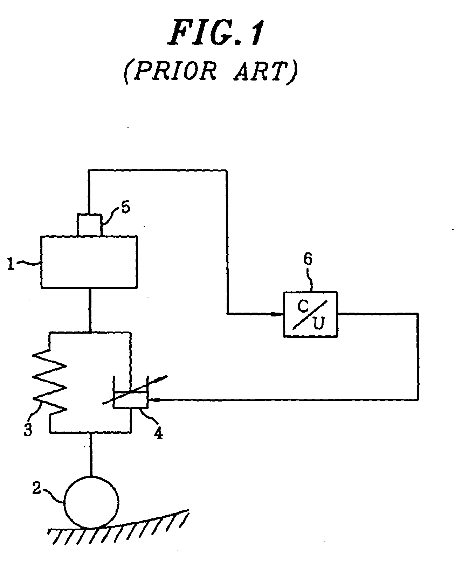

Referring to Fig. 1, there is illustrated a schematic view of a conventional electronically-controlled suspension apparatus, which has been disclosed in U.S. Patent No. 6,058,340, entitled "SUSPENSION CONTROL APPARATUS".

As shown in Fig. 1, a spring 3 and an expansible/contractible shock absorber (or damper) 4 of an inverting variable damping coefficient type are arranged in parallel between a vehicle body (sprung mass) 1 and one of four wheels (unsprung mass) 2 of a vehicle to support the vehicle body 1. "Inverting type" means that the damping coefficient for contraction is decreased when the damping coefficient for extension is increased, and the damping coefficient for contraction is increased when the damping coefficient for extension is decreased. An acceleration sensor 5 for detecting the acceleration of the vehicle body 1 in an up-and-down direction is attached to the vehicle body 1. An acceleration signal from the acceleration sensor 5 is supplied to a controller 6. Incidentally, although four shock absorbers 4 of variable damping coefficient type and four springs 3 are provided in correspondence to four wheels 2, respectively, only one set of the shock absorber and the spring is shown for the sake of simplicity.

In the above-described electronically-controlled suspension apparatus, the controller 6 for adjusting damping force of the shock absorber 4 according to road surface, i.e., road surface condition, is typically implemented using either a first method for determining the damping force in proportion to vertical acceleration or a second method for determining a damping force mode according to the road surface.

A plurality of controllers for controlling the damping force using the first method based on the vertical acceleration have been disclosed in U.S. Patent No. 6,058,340, and one of them is shown in Fig. 2 as an example of the controller 6.

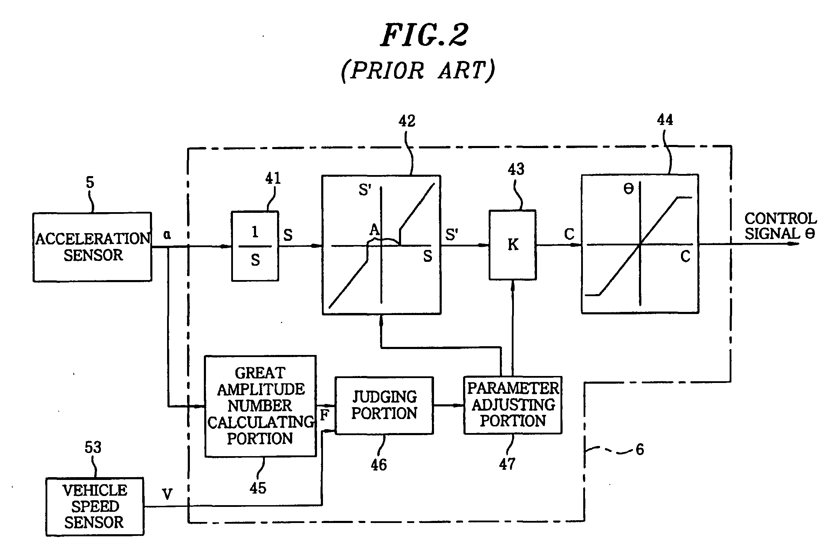

As shown in Fig. 2, the controller 6 includes an integration treatment portion 41, a correction value calculating portion 42, a control target value calculating portion 43, a control signal generating portion 44, a great amplitude number calculating portion 45, a judging portion 46, and a parameter adjusting portion 47. The integration treatment portion 41 and the acceleration sensor 5 constitute an upward and downward absolute velocity detection means in which an acceleration signal α of the acceleration sensor 5 is integrated to obtain an upward or downward absolute velocity S which is in turn sent to the correction value calculating portion 42 serving as a correction value calculating means. The correction value calculating portion 42 stores therein information representative of the correspondence between data in the range excluding a portion which is smaller than a predetermined value A (this portion is referred to as "dead band" A hereinafter) of the upward and downward absolute velocities S and data S' (referred to as "corrected upward or downward absolute velocity" hereinafter) proportional to the aforementioned data, so that by inputting the upward or downward absolute velocity S to this correction value calculating portion 42, a corresponding corrected upward or downward absolute velocity S' can be obtained. And the absolute velocity S' is in turn sent to the control target value calculating portion 43 serving as a control target value calculating means.

The control target value calculating portion 43 serves to multiply the corrected upward or downward absolute velocity S' by the control gain K to obtain a control target value C which is in turn sent to the control signal generating portion 44 serving as a control signal generating means. The control signal generating portion 44 generates a control signal θ for determining damping force of the shock absorber 4 on the basis of the control target value C, and this control signal θ is outputted to the actuator (not shown) for adjusting the damping force of the shock absorber 4. In this case, information (a graph showing this information is illustrated in a block representing the control signal generating portion 44 in Fig. 2) representative of the relationship between the control target value C set on the basis of the features of the variable damping coefficient type shock absorber 4 and the corresponding control signal θ is stored in the control signal generating portion 44, so that, by inputting the control target value C to the control signal generating portion 44, the corresponding control signal θ can be obtained.

The actuator establishes the desired damping coefficient for extension or contraction of the shock absorber 4 of variable damping coefficient type on the basis of the control signal θ. For example, if the absolute velocity of the vehicle body 1 is increased in a positive direction (upward direction of the vehicle) to increase the target value C of the damping coefficient regarding the positive direction, as shown by the graph in the block representing the control signal generating portion 44 in Fig. 2, the damping coefficient for extension is increased and the damping coefficient for contraction is decreased. On the other hand, if the absolute velocity of the vehicle body 1 is increased in a negative direction (downward direction of the vehicle) to increase the target value C of the damping coefficient regarding the negative direction, the damping coefficient for extension is decreased and the damping coefficient for contraction is increased.

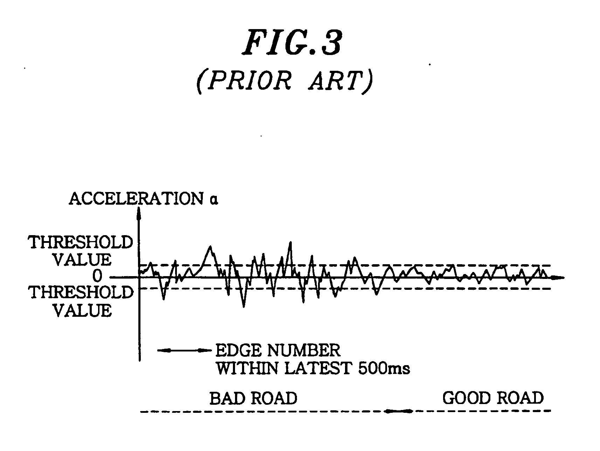

The great amplitude number calculating portion 45 has threshold values regarding the acceleration signal α (see Fig. 3), so that the number of changes wherein values of two successive acceleration signals α escape from a predetermined range defined by the upper and lower threshold values within a predetermined time period of 500 msec is counted to obtain a great amplitude number signal F (corresponding to the counted value) which is in turn sent to the judging portion 46. The judging portion 46 previously stores information representative of road surfaces corresponding to the great amplitude numbers counted by the great amplitude number calculating portion 45. When the great amplitude number signal F from the great amplitude number calculating portion 45 is received in the judging portion 46, the judging portion 46 judges a corresponding road surface, and transmits the judged result to the parameter adjusting portion 47 serving as a control gain adjusting means and a dead band adjusting means. The parameter adjusting portion 47 serves to adjust the control gain K and the dead band A (predetermined value A) in response to the judged result from the judging portion 46. Incidentally, the parameter adjusting portion 47 may be designed so that at least one of the control gain K and the dead band A can be adjusted in response to the judged result from the judging portion 46.

Although the aforementioned description relates to an exemplary case in which the judging portion 46 judges a current road surface on the basis of a great amplitude number signal F counted by the great amplitude number calculating portion 45, it can be noted that the output of the vehicle speed sensor 53, i.e., a vehicle speed, is received in the judging portion 46. Therefore, the road surface judged by the judging portion 46 is judged using the vehicle speed as well.

The vehicle speed sensor 53 attached to the vehicle body 1 detects a vehicle speed which is in turn sent to the judging portion 46. The judging portion 46 previously stores information capable of determining road surface conditions in response to the great amplitude number signal F generated from the great amplitude number calculating portion 45. When the great amplitude number signal F and the vehicle speed signal V generated from the vehicle speed sensor 53 are received in the judging portion 46, the judging portion 46 judges the road surface by selecting road surface condition information in response to the received signals F and V, and transmits the judged result to the parameter adjusting portion 47.

Also, a vehicle height sensor (not shown in Fig. 2) may be attached to the vehicle body, and in this case, a vehicle height detection value detected by the vehicle height sensor is received in the judging portion 46, so that the judging portion may further use the received vehicle height detection value along with the acceleration detection value and the vehicle speed detection value as judgment reference values. If the number of the judgment reference values for judging the road surface are increased, damping force of the shock absorber can be precisely controlled according to the road surface, resulting in improved ride comfort of the vehicle.

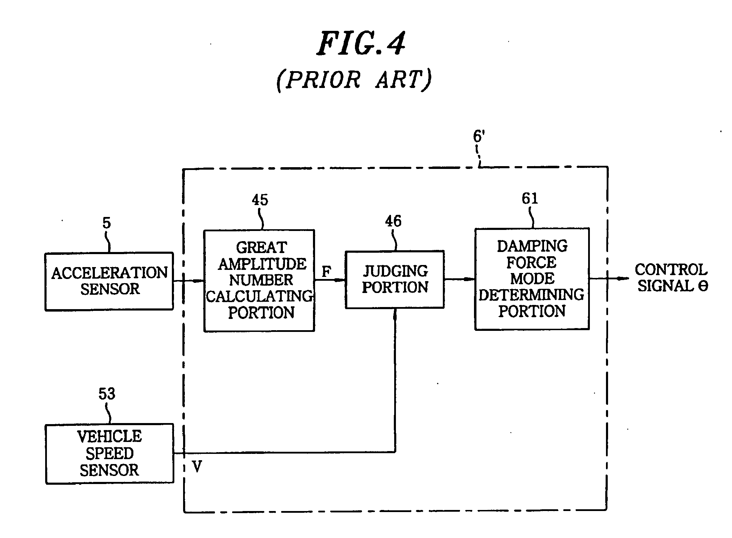

Referring to Fig. 4, there is presented a block diagram of a second conventional controller for controlling damping force of a shock absorber (damper) of the electronically-controlled suspension apparatus in response to the road surface, wherein like parts to those shown in Fig. 2 are represented by like reference characters.

As can be seen from the controller 6 in Fig. 2, the judging portion 46 previously stores information capable of judging road surface in response to the great amplitude number signal F obtained by the great amplitude number calculating portion 45. When the great amplitude number signal F and the vehicle speed signal V generated from the vehicle speed sensor 53 are received in the judging portion 46, the judging portion 46 judges the road surface by selecting road surface condition information in response to the received signals F and V, and transmits the judged result to the damping force mode determining portion 61.

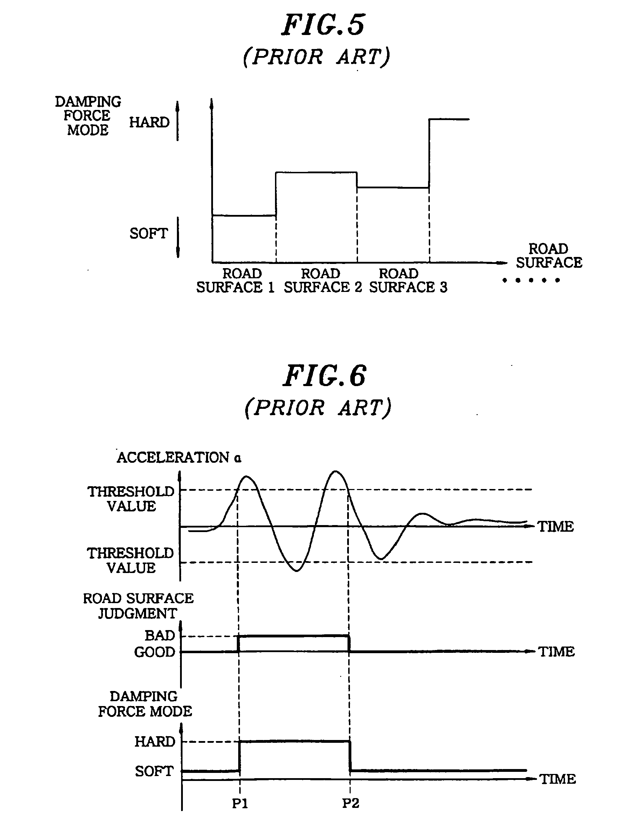

The damping force mode determining portion 61 determines a damping force mode on the basis of the road surface judgment made by the judging portion 46. The damping force mode can be classified into three modes (i.e., a soft mode, a medium mode and a hard mode), or each of the three modes can be classified into plural sub-modes. Therefore, the damping force mode determining portion 61 determines a damping force mode of the shock absorber (or damper) according to the road surface judgment (e.g., a road surface 1, a road surface 2 and a road surface 3, .....) as shown in Fig. 5, and transmits a damping force mode control signal θ to the actuator (not shown).

Therefore, the actuator changes a damping coefficient of the shock absorber 4 according to the damping force mode determined by the damping force mode determining portion 61, such that the damping force is controlled in response to a corresponding mode.

Further, as in the above description on the controller 6, the controller 6' of Fig. 4 may further use a vehicle height detection value detected by the vehicle height sensor as the judgment reference value for judging road surface.

In the meantime, in the case where the electronically-controlled suspension apparatus incorporating the controllers for controlling the damping force shown in Figs. 2 and 4 requires a high variation in damping force characteristics according to the road surface judgment, the road surface judgment must be quickly made to improve response characteristics. Therefore, the level of the threshold value for judging the road surface as shown in Fig. 3 must be maximally reduced to the lowest value unless there is misjudgment of road surface.

However, if a low threshold value is established to improve the response characteristics, the road surface judgment is maintained for a relatively-long period of time even after the vehicle passes through a specific road surface on which the damping force mode of the vehicle is required to be in the hard mode. Therefore, the movement of the vehicle is unnatural, resulting in deteriorated ride comfort of the vehicle.

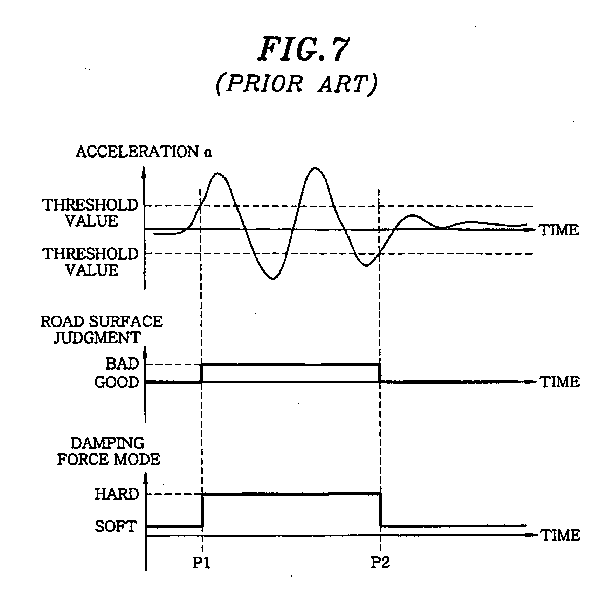

Referring to Fig. 6, there is provided a waveform diagram illustrating a damping force control operation when a high acceleration threshold value is established in the controller 6' shown in Fig. 4.

As shown in Fig. 6, if an acceleration signal α escapes from the threshold value and the bad road surface judgment is made by the judging portion 46, the damping force mode determining portion 61 shifts the damping force mode to the hard mode at a point P1. If the acceleration signal α is received in a predetermined range limited by the threshold value at a point P2 and the good road surface judgment is made by the judging portion 46, the damping force mode determining portion 61 immediately shifts the damping force mode to the soft mode.

However, since the acceleration threshold value is set to a high value, the bad road surface judgment is made at a time later than that of the other cases in which the acceleration threshold value is set to a low value. Therefore, the response characteristics become poor. Meanwhile, the good road surface judgment is made at an earlier time after passing the bad road surface, such that the damping force mode is shifted to the soft mode. Therefore, the ride comfort deterioration caused by hard mode maintenance of the damping force can be greatly reduced.

Referring to Fig. 7, there is provided a waveform diagram illustrating a damping force control operation when a low acceleration threshold value is established in the controller 6' in Fig. 4.

As shown in Fig. 7, if the acceleration signal α escapes from the threshold value and the bad road surface judgment is made by the judging portion 46, the damping force mode determining portion 61 shifts the damping force mode to hard mode at a point P1. If the acceleration signal α is received in a predetermined range limited by the threshold value at a point P2 so that the good road surface judgment is made by the judging portion 46, the damping force mode determining portion 61 immediately shifts the damping force mode to the soft mode.

In this case, since the acceleration threshold value is set to a low value, the bad road surface is judged at a time earlier than that of the other cases in which the acceleration threshold value is set to a high value. Therefore, the response characteristics become good. Meanwhile, the good road surface judgment is made at a later time after passing the bad road surface. That is, the damping force is maintained at the hard mode for a relatively-long period of time, and then damping force mode is shifted to the soft mode. Therefore, the ride comfort deterioration caused by the hard mode maintenance of the damping force may occur.

Although the aforementioned description has disclosed problems of the electronically-controlled suspension apparatus incorporating the controller 6' shown in Fig. 4, the response characteristics and ride comfort problems

Caused by the high or low threshold value setup can also occur in the electronically-controlled suspension apparatus having the controller 6 shown in Fig. 2.

A method for controlling damping force in an electronically-controlled suspension apparatus according to the generic part of claim 1 is known from EP-A-0465849. Furthermore, US-B1-6176494 and US-A-4647068 disclose very similar methods to the method according to the generic part of claim 1 for controlling damping force in response to the road surface judgment.

It is, therefore, an object of the present invention to improve the known method and to provide a method for controlling damping force in an electronically-controlled suspension apparatus, which determines either appropriate damping force or an appropriate damping force mode using not only the number of acceleration signal edges exceeding a threshold value, but also a hold time for maintaining road surface condition judgment in the case where the road surface judgment is made to control damping force of a variable damper while driving, such that it establishes rapid response characteristics due to a lowered threshold value, and prevents ride comfort of a vehicle from being deteriorated due to a relatively-long hard mode maintenance of a damping force.

This object will be achieved with the known method and the further methods steps according to the characterizing portion of claim 1.

The above and other objects and features of the present invention will become more apparent from the following description of preferred embodiments given in conjunction with the accompanying drawings, in which:
Fig. 1 is a schematic view of a conventional electronically-controlled suspension apparatus;
Fig. 2 presents a block diagram illustrating a controller for controlling damping force for use in the electronically-controlled suspension apparatus of Fig. 1;
Fig. 3 shows a threshold setup example for establishing an acceleration threshold value to control damping force;
Fig. 4 presents a block diagram illustrating another controller for controlling damping force for use in the electronically-controlled suspension apparatus of Fig. 1;
Fig. 5 shows an example of a damping force mode determination state in response to a road surface judgment;
Fig. 6 provides a waveform diagram illustrating a damping force control operation when a high acceleration threshold value is established in the controller of Fig. 4;
Fig. 7 provides a waveform diagram illustrating a damping force control operation when a low acceleration threshold value is established in the controller of Fig. 4;
Fig. 8 presents a flow chart illustrating a damping force control method for use in an electronically-controlled suspension apparatus in accordance with the present invention;
Fig. 9 sets forth graphs illustrating damping force control operation in accordance with the present invention; and
Fig. 10 presents a graph illustrating an example of a damping force control operation for use in the electronically-controlled suspension apparatus in accordance with the present invention.

Preferred embodiments of the present invention will now be described in detail with reference to the accompanying drawings.

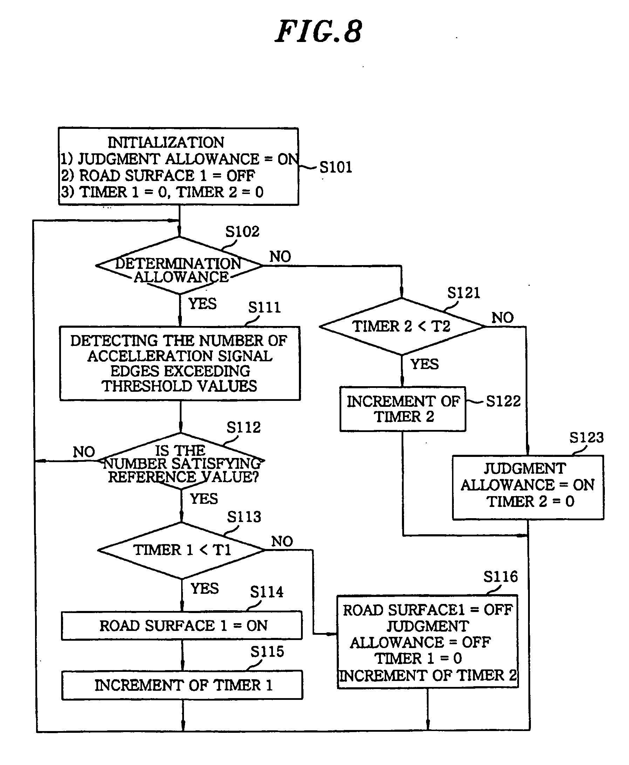

Referring to Fig. 8, there is provided a flow chart illustrating a damping force control method for use in an electronically-controlled suspension apparatus in accordance with the present invention.

Prior to describing the present invention, several terms are defined as follows:

A road surface judgment allowance "ON" state indicates a state in which a judgment on a road surface can be made, i.e., a road surface judgment allowance state. A road surface judgment allowance "OFF" state indicates a state in which the judgment on the road surface is not made, i.e., a road surface judgment disallowance state. A road surface 1 indicates a bad road surface when the road surface is judged to be one of a bad and a good road surface. More specifically, the road surface 1 "ON" state indicates a first case in which the road surface is judged to be the bad road surface, i.e., a bad road surface judgment, and the road surface 1 "OFF" state indicates a second case in which the road surface is judged to be the good road surface, i.e., a good road surface judgment.

A plurality of timers (Timer 1, Timer 2, and Timer 3) are internal timers installed in a typical vehicular electronic control unit. Time T1 is a road surface judgment maintenance time, i.e., a predetermined period of time during which the bad road surface judgment is maintained. Time T2 is a road surface judgment disallowance state maintenance time, i.e., a predetermined period of time during which the road surface judgment disallowance state is maintained. T3 time is a linear change time, a predetermined period of time, during which the damping force is linearly changed when changing a damping force mode to another mode according to the road surface judgment.

As shown in Fig. 8, the damping force control method in accordance with the preferred embodiment of the present invention includes a first group of steps S101~S111, a second group of steps S112~S115, a third group of steps S113~S116, a fourth group of steps S116 and S122, and a fifth group of steps S121~S123. More specifically, in the first group of steps S101~S111, if a vertical acceleration signal of a vehicle body serving as a judgment reference value for the road surface judgment exceeds a predetermined threshold value, the number of acceleration signal edges exceeding the predetermined threshold value within a predetermined period of time is counted and compared with a predetermined reference condition in the road surface judgment allowance state. In the second group of steps S112~S115, the road surface is selectively judged to be the bad road surface according to the result of the comparison, the damping force is controlled in response to the bad road surface judgment, and at the same time a first hold time during which the bad road surface judgment is maintained is counted. In the third group of steps S113~S116, the counted first hold time is compared with the predetermined time T1, and the bad road surface judgment is selectively restored to the good road surface judgment according to the result of the comparison of the first hold time with the predetermined time T1. In the fourth group of steps S116 and S122, the damping force is controlled in response to the good road surface judgment according to the restoration decision, the road surface judgment allowance state is changed to be the road surface judgment disallowance state, and a second hold time during which the road surface judgment disallowance state is maintained is counted. In the fifth group of steps S121~S123, the counted second hold time is compared with the predetermined time T2, and the road surface judgment disallowance state is selectively changed to be the road surface judgment allowance state according to the result of comparison of the second hold time with the predetermined time T2.

When the above-described damping force control method according to the present invention is adapted to the controller 6' of Fig. 4 for use in the electronically-controlled suspension apparatus, the controller 6' for controlling the damping force is operated as follows.

The vertical acceleration signal detected by the acceleration sensor 5 is supplied to the great amplitude number calculating portion 45. The great amplitude number calculating portion 45 determines the number of acceleration signal edges exceeding the threshold value predetermined for judging the road surface within the predetermined period of time, and transmits the determined number to the judging portion 46. In other words, the great amplitude number signal F is transmitted to the judging portion 46.

Thereafter, the road surface judgment process for determining damping force is carried out by the judging portion 46.

As shown in Fig. 8, at initialization step S101, the road surface judgment allowance state is set to be in the "ON" state, the road surface 1 is set to be in the "OFF" state, and the first and second timers (Timer 1 and Timer 2) are set to have zero.

The road surface judgment allowance state is maintained in the "ON" state at step S102. Therefore, the road surface judgment process proceeds to step S111, and upon receipt of the great amplitude number signal F, i.e., the number of the acceleration signal edges exceeding the threshold value, from the great amplitude number calculating portion 45 at step S111, it is compared with the predetermined reference condition predetermined for the road surface judgment. In this case, the reference condition for the road surface condition judgment may be a predetermined reference number or a predetermined reference number range.

If the number of acceleration signal edges exceeding the threshold value satisfies the predetermined reference condition at step S112, the first hold time, i.e., the time counted by the first timer (Timer 1), is compared with the predetermined Time T1 at step S113. If the first hold time is shorter than the time T1 at step S113, step S114 is performed. If the first hold time is equal to or longer than the time T1 at step S113, step S116 is performed.

Since the first hold time is not increased yet in an initial driving state, the state of the road surface 1 is changed from the "OFF" state to the "ON" state at step S114. That is, the current road surface judgment indicative of the good road surface is changed to be the bad road surface judgment. Moreover, the first timer (Timer 1) starts its timing operation, and thereby the first hold time is increased at step S115. Then, the road surface judgment process proceeds to step S102.

When the current road surface is judged to be the bad road surface at step S114, the damping force mode determining portion 61 receives the judged result, and shifts the damping force mode of a variable damper to a hard mode.

Thereafter, after the lapse of a period of time, if the first hold time counted by the first timer (Timer 1) for the bad road surface judgment maintenance is equal to or longer than the predetermined time T1, step S116 is performed. At step S116, the state of the road surface 1 is changed from the "ON" state to the "OFF" state. In other words, the current road surface judgment indicative of the bad road surface judgment is changed to be the good road surface judgment. Also, at step S116, the road surface judgment allowance state is changed from the "ON" state to the "OFF" state, the value of the first timer (Timer 1) is initialized to zero, and the second timer (Timer 2) starts its timing operation and thereby the second hold time during which the road surface judgment disallowance state is maintained is increased. Then, the road surface judgment process proceeds to step S102.

When the road surface on which a vehicle is running is judged to correspond to the good road surface by the judging portion 46 at step S116, the damping force mode determining portion 61 receives the judged result, and shifts the damping force mode to a soft mode.

Then, since the judgment allowance state is maintained in the "OFF" state at step S102, the road surface judgment process proceeds to step S121. At step S121, the second hold time counted by the second timer (Timer 2) is compared with the predetermined time T2. In this case, the second hold time is shorter than the time T2 when the second timer (Timer 2) is initially driven. Therefore, the road surface judgment process proceeds to step S122 in which the second hold time counted by the second timer is increased, and then proceeds to step S102.

Thereafter, after the lapse of a period of time, if the second hold time counted by the second timer for the road surface judgment disallowance state is equal to or longer than the time T2 at step S121, the road surface judgment process proceeds to step S123. At step S123, the judgment allowance state is changed from the "OFF" state to the "ON" state. In other words, the road surface judgment disallowance state is changed to be the road surface judgment allowance state. And the second timer is initialized to zero, and then the road surface judgment process proceeds to step S102.

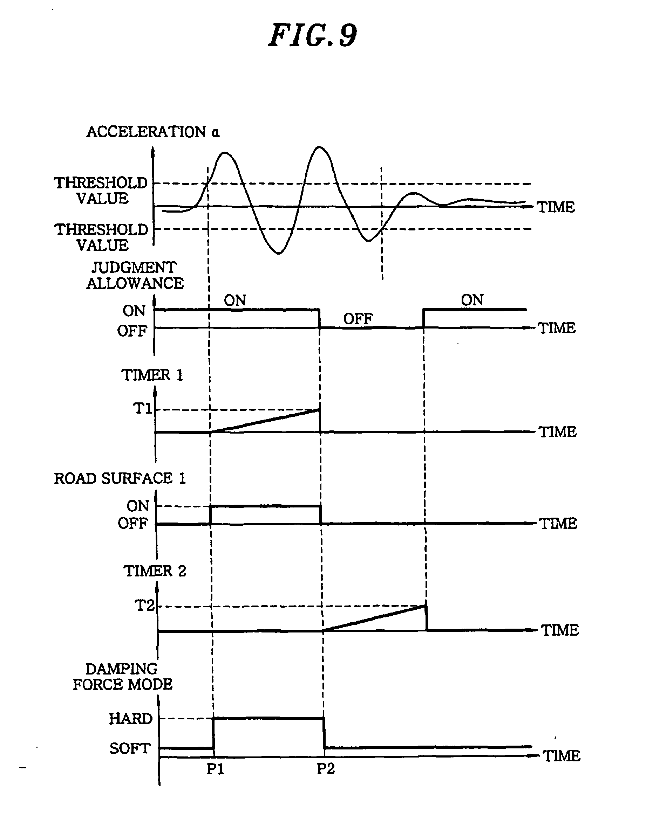

Referring to Fig. 9, there are presented graphs illustrating damping force control operation in accordance with the present invention. As shown in Fig. 9, the judgment allowance state is in the "ON" state at a first point P1 so that the state of the road surface 1 is changed into the "ON" state on the basis of the vertical acceleration signal in such a way that the damping force mode is changed to the hard mode. The judgment allowance state is changed to the "OFF" state at a second point P2 when the first timer (Timer 1) reaches the time T1, i.e., the first hold time counted by the first timer becomes the time T1, so that the state of the road surface 1 is changed to the "OFF" state in such a way that the damping force mode is changed to the soft mode. Thereafter, after the lapse of the time T2, the judgment allowance state is changed into the "ON" state, and the state of the road surface 1 is maintained in the "OFF" state on the basis of the vertical acceleration signal in such a way that the damping force mode is maintained in the soft mode.

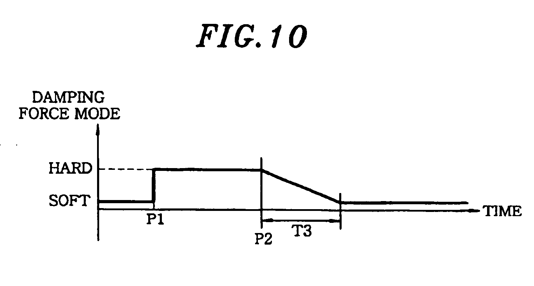

In the meantime, when the road surface judgment allowance state is changed from the "ON" state to the "OFF" state by the judging portion 46, the damping force mode determining portion 61 changes the damping force mode from the hard mode to the soft mode. At this time, if damping force is abruptly lowered, ride comfort of the vehicle may be deteriorated. Therefore, when the damping force mode of the variable damper is changed from the hard mode to the soft mode, it is preferable for the damping force to be linearly reduced as shown in Fig. 10. In other words, when the damping force mode is changed to the soft mode at the second point P2, the third timer (Timer 3) starts its timing operation, and at the same time the damping force is linearly reduced in the direction from the hard mode to the soft mode over the time T3, i.e., the linear change time.

Although the aforementioned description discloses an example in which only vertical acceleration of the vehicle body is considered as the judgment reference value for the road surface judgment, it should be noted that a vehicle speed detection value detected by the vehicle speed sensor and/or a vehicle height detection value detected by the vehicle height sensor may also be used as the judgment reference value in the same manner as in the conventional art. If the number of the judgment reference values for the road surface judgment is increased, damping force of a variable damper can be more precisely controlled according to the road surface judgment, resulting in improved ride comfort of the vehicle.

Although the aforementioned preferred embodiment of the present invention discloses an exemplary case in which the damping force control method of the present is adapted to the controller 6' of Fig. 4, it should be noted that the same effects as those of the aforementioned preferred embodiment can also be obtained even when the damping force control method is adapted to the controller 6 of Fig. 2.

More specifically, when the judging portion 46 transmits a road surface judgment result, obtained by using not only the number of acceleration signal edges exceeding the threshold value but also the hold time for the road surface judgment maintenance, to the parameter adjusting portion 47, the parameter adjusting portion 47 adjusts a dead band A (parameter value A) and a control gain K in response to the judged result of the judging portion 46, so that a control target value C generated from the control target value calculating portion 43 is changed. Therefore, a control signal θ generated from the control signal generating portion 44 to determine the damping force is changed, and a damping coefficient for extension or contraction of the damper is adjusted on the basis of the control signal θ. That is, the damping force of the damper is determined on the basis of the number of acceleration signal edges exceeding the threshold value and the hold time for the road surface judgment maintenance.

Also, the damping force control method can be applied to a variety of electronically-controlled suspension apparatuses, each of which includes a running environment sensing means, such as a vertical acceleration sensor and a steering angle sensor, a damping force varying means, such as a variable damper and an actuator, and a control means such as an electronically-controlled unit, etc. Further, the damping force control method can also be applied to all kinds of technology fields capable of variably controlling damping force according to a road surface judgment obtained using a predetermined threshold value.

Although the present invention discloses an example in which the damping force control method is applied to a shock absorber of inverting-variable damping coefficient type, it should be noted that those skilled in the art could readily apply the damping force control method of the present invention to a normal-type shock absorber whose damping coefficients for extension and contraction are increased or decreased together.

As apparent from the above description, the damping force control method in accordance with the present invention determines appropriate damping force using not only the number of acceleration signal edges exceeding a threshold value, but also a hold time for a road surface judgment maintenance in the case where the road surface is judged to control damping force of a variable damper while driving, such that it establishes rapid response characteristics due to a lowered threshold value, and prevents ride comfort of a vehicle from being deteriorated due to a relatively-long hard mode maintenance of a damping force mode.

While the invention has been shown and described with respect to the preferred embodiments, it will be understood by those skilled in the art that various changes and modifications may be made without departing from the scope of the invention as defined in the following claims.

## Claims

1. A method for controlling damping force in an electronically-controlled suspension apparatus on the basis of a judgment reference value for judging a road surface during a vehicle driving time, wherein the judgment reference value is compared with a predetermined threshold value, the road surface is judged according to a result of the comparison, and the damping force is controlled in response to the road surface judgment, and wherein the road surface judgment is maintained for a predetermined road surface judgment maintenance time,
**characterized by** the further steps of:
determining how many times signal edges of the judgment reference value exceed the predetermined threshold value within a predetermined period of time, and comparing the determined number of the signal edges of the judgment reference value with a predetermined reference condition in a road surface judgment allowance state;
selectively changing a first road surface judgment into a second road surface judgment according to a result of the comparison of the determined number of the signal edges of the judgment reference value with the predetermined reference condition, controlling the damping force in response to the second road surface judgment, and counting a first hold time during which the second road surface judgment is maintained;
comparing the counted first hold time with the predetermined road surface judgment maintenance time, and selectively changing the second road surface judgment into the first road surface judgment according to a result of the comparison of the counted first hold time with the predetermined road surface judgment maintenance time;
controlling the damping force in response to the first road surface judgment, at the same time changing the road surface judgment allowance state into a road surface judgment disallowance state, and counting a second hold time during which the road surface judgment disallowance state is maintained; and
comparing the counted second hold time with a predetermined road surface judgment disallowance maintenance time, and selectively changing the road surface judgment disallowance state into the road surface judgment allowance state according to a result of the comparison of the counted second hold time with the predetermined road surface judgment disallowance maintenance time.

2. The method of claim 1, wherein the damping force is linearly changed over a predetermined linear change time when the damping force is controlled.

## Patentansprüche

1. Verfahren zum Steuern einer Dämpfungskraft in einer elektronisch gesteuerten Aufhängungsvorrichtung auf der Grundlage eines Beurteilungsreferenzwerts zum Beurteilen einer Straßenoberfläche während einer Fahrzeugfahrzeit, bei dem der Beurteilungsreferenzwert mit einem vorbestimmten Grenzwert verglichen wird, die Straßenoberfläche gemäß einem Ergebnis des Vergleichs beurteilt wird und die Dämpfungskraft in Antwort auf die Straßenoberflächenbeurteilung gesteuert wird und bei dem die Straßenoberflächenbeurteilung für eine vorbestimmte Zeitdauer zur Beibehaltung der Straßenoberflächenbeurteilung beibehalten wird,
**gekennzeichnet durch** die weiteren Schritte:
Ermitteln, wie oft Signalflanken des Beurteilungsreferenzwerts den vorbestimmten Grenzwert innerhalb einer vorbestimmten Zeitdauer überschreiten, und Vergleichen der ermittelten Anzahl der Signalflanken des Beurteilungsreferenzwerts mit einem vorbestimmten Referenzzustand in einem Zustand zur Erlaubnis der Straßenoberflächenbeurteilung;
selektives Ändern einer ersten Straßenoberflächenbeurteilung in eine zweite Straßenoberflächenbeurteilung gemäß einem Ergebnis des Vergleichs der ermittelten Anzahl der Signalflanken des Beurteilungsreferenzwerts mit dem vorbestimmten Referenzzustand, Steuern der Dämpfungskraft in Antwort auf die zweite Straßenoberflächenbeurteilung und Berechnen einer ersten Haltezeit, während der die zweite Straßenoberflächenbeurteilung beibehalten wird;
Vergleichen der berechneten ersten Haltezeit mit der vorbestimmten Zeitdauer zur Beibehaltung der Straßenoberflächenbeurteilung und selektives Ändern der zweiten Straßenoberflächenbeurteilung in die erste Straßenoberflächenbeurteilung gemäß einem Ergebnis des Vergleichs der berechneten ersten Haltezeit mit der vorbestimmten Zeitdauer zur Beibehaltung der Straßenoberflächenbeurteilung;
Steuern der Dämpfungskraft in Antwort auf die erste Straßenoberflächenbeurteilung, gleichzeitiges Ändern des Zustands zur Erlaubnis der Straßenoberflächenbeurteilung in einen Zustand zur Annullierung der Straßenoberflächenbeurteilung und Berechnen einer zweiten Haltezeit, während der der Zustand zur Annullierung der Straßenoberflächenbeurteilung beibehalten wird; und
Vergleichen der berechneten zweiten Haltezeit mit einer vorbestimmten Zeitdauer zur Beibehaltung der Annullierung der Straßenoberflächenbeurteilung und selektives Ändern des Zustands zur Annullierung der Straßenoberflächenbeurteilung in den Zustand zur Erlaubnis der Straßenoberflächenbeurteilung gemäß einem Ergebnis des Vergleichs der berechneten zweiten Haltezeit mit der vorbestimmten Zeitdauer zur Beibehaltung der Annullierung der Straßenoberflächenbeurteilung.

2. Verfahren nach Anspruch 1, bei dem die Dämpfungskraft während einer vorbestimmten Zeitdauer zur linearen Änderung linear geändert wird, wenn die Dämpfungskraft gesteuert wird.

## Revendications

1. Procédé de commande d'une force d'amortissement dans un appareil de suspension à commande électronique en fonction d'une valeur de référence d'estimation permettant d'estimer une surface de route pendant le temps de conduite d'un véhicule, dans lequel la valeur de référence d'estimation est comparée à une valeur seuil prédéterminée, la surface de route est estimée en fonction d'un résultat de la comparaison et la force d'amortissement est commandée en réponse à l'estimation de surface de route, et dans lequel l'estimation de surface de route est maintenue pendant un temps prédéterminé de maintien d'estimation de surface de route,
**caractérisé par** les étapes consistant à :
■ déterminer combien de fois les crêtes de signal de la valeur de référence d'estimation dépassent la valeur seuil prédéterminée pendant une période prédéterminée, et comparer le nombre déterminé de crêtes de signal de la valeur de référence d'estimation à une condition de référence prédéterminée lors d'un état de permission d'estimation de surface de route ;
■ changer sélectivement une première estimation de surface de route en une seconde estimation de surface de route en fonction du résultat de la comparaison du nombre déterminé de crêtes de signal de la valeur de référence d'estimation à la condition de référence prédéterminée, commander la force d'amortissement en réponse à la seconde estimation de surface de route, et compter un premier temps de retenue pendant lequel la seconde estimation de surface de route est maintenue ;
■ comparer le premier temps de retenue compté au temps de maintien de l'estimation de surface de route prédéterminé, et changer sélectivement la seconde estimation de surface de route en première estimation de surface de route en fonction du résultat de la comparaison entre le premier temps de retenue compté et le temps de maintien de l'estimation de surface de route prédéterminé ;
■ commander la force d'amortissement en réponse à la première estimation de surface de route, en même temps changer l'état de permission d'estimation de surface de route en état de non-permission d'estimation de surface de route, et compter un second temps de retenue pendant lequel l'état de non-permission d'estimation de surface de route est maintenu ; et
■ comparer le second temps de retenue compté à un temps de maintien de non-permission d'estimation de surface de route prédéterminé, et changer sélectivement l'état de non-permission d'estimation de surface de route en état de permission d'estimation de surface de route en fonction d'un résultat de la comparaison entre le second temps de retenue compté et le temps de maintien de non-permission d'estimation de surface de route prédéterminé.

2. Procédé selon la revendication 1, dans lequel la force d'amortissement est changée de manière linéaire au cours d'un temps de changement linéaire prédéterminé lorsque la force d'amortissement est commandée.
